# EUROPEAN PATENT APPLICATION

(11) **EP 3 502 077 A1**
(43) Date of publication of application: **26.06.2019**
(21) Application number: 17210519.9
(22) Date of filing: 22.12.2017
(51) Int. Cl.: C03C 17/28

(54) **COATING COMPOSITION FOR GLASS CONTAINERS**

(71) Applicant: ARKEMA B.V., 3196 KE Vondelingenplaat-Rotterdam (NL)
(72) Inventor: HOEKMAN, Leendert Cornelis, 4461 NM GOES (NL)
(74) Representative: Senff, Holger

(57) **Abstract**

The present invention relates to a coating composition for glass container.

In particular it relates to a coating composition for returnable glass containers.

The present invention relates to the use of an aqueous composition comprising a coating composition suitable for returnable glass container and its process of application.

## Description

### [Field of the invention]

The present invention relates to a coating composition for glass container.

In particular it relates to a coating composition for returnable glass containers.

The present invention relates to the use of an aqueous composition comprising a coating composition suitable for returnable glass container and its process of application.

### [Technical problem]

Hollow glass containers are produced from molten glass at molds at high temperatures. As the surface of these containers is fragile and in order to preserve the strength of the glass and to prevent any direct glass to glass contact of the respective containers in order to avoid damage, they are surface coated directly after forming of the container.

Such a coating includes tin or, titanium or other heat decomposable metallic or organometallic based compounds. This is the basis of the coating needed for protection of the glass container surface from damage such as abrasions and scratches, which result in a loss of strength for the glass container. The need for high tensile strength in a glass container is particularly acute when containers are mass produced, move rapidly in close proximity along high speed conveyor lines.

Nowadays in glass container manufacturing a two-step coating is applied in order to obtain scratch resistance and slipperiness of the glass containers. So the glass containers typically receive two surface coatings, one at the *hot end,* just before annealing and one at the *cold end* just after annealing.

In the first step, the so called hot-end coating (HEC) is applied by means of chemical vapor deposition (CVD) of a metal containing compound on the freshly formed, hot and single or double line positioned glass containers, as mentioned before.

In a second step, the so called cold end coating (CEC) is applied, usually by spraying means, in form of an aqueous dispersion. Usually partly oxidized polyethylene wax dispersions are applied. With this additional coating on glass containers surface a long-lasting protection is provided, consisting in scratch resistance and prevention of scuffing of glass surfaces during filling and transportation.

Glass containers can be recycled and reused. If reused, such returnable glass containers are collected, cleaned and refilled.

The cleaning step of returnable glass containers includes usually caustic washing. During the caustic washing the cold end coating but also the hot end coating are gradually eroded. Unprotected bare glass surface is exposed after a few cycles and scuffing begins. Therefore a protective coating can be re-applied after washing and before refilling. However the adhesion of the protective coating on the surface of the glass container could be much less than the initial cold end coating.

Furthermore it could happen that a majority or large parts of the cold end coating or protective coating are not washed of completely during caustic washing. The still present coating residues yields to unpleasant surface aspect after recycling of the returnable glass containers especially after several recycling steps, when new coating is applied on residues or layer of former coating.

Sometimes a coating is applied that only hides the scuffing of the returnable glass containers.

There is still the need for more efficient glass treatment and glass treatment process and glass coating for returnable glass containers.

An objective of the present invention is to increase the life time of returnable glass containers.

An objective is to provide a coating composition that provides a protective coating on glass containers and especially returnable glass containers.

An objective is to provide a coating composition that provides a lubricating coating on glass containers and especially returnable glass containers.

Another objective of the present invention is to provide a coating composition that is washed of completely during the washing step of the returnable containers.

Still another objective of the present invention is to provide a coating composition that once applied, resists to the treatment of the recycled containers until they leave the filling plant.

Still an additional objective is to provide a process for applying a coating composition that is washed of completely during the washing step of the returnable containers and that resists to the treatment of the recycled containers until they leave the filling plant.

### [BACKGROUND OF THE INVENTION ]Prior art

The document US 4,803,099 describes a modified polyethylene, methods for its preparation and methods for finishing the external surfaces of glass containers. The modified polyethylene is suitable for cold-end coating of glass. The modified polyethylene comprises acid amide groups.

The document GB 1,049,717 describes also a lubricous coating for glass. The coating composition comprises a reaction product of polyvinyl alcohol, an emulsified polyethylene and an acid compound.

The document GB discloses a lubricity coating for plastics coated glass articles. The coating comprises an ionic copolymer of an alphaolefin and an alpha,beta-ethylenically unsatured carboxylic acid.

The document WO2004/049219 discloses a protective coating applying method for returnable glass containers. The protective coating is a paraffin based coating.

None of the cited prior art discloses a coating composition comprising the wax compound (W1) that has a melting point below 85°C, especially as coating for glass containers.

### [Brief description of the invention]

Surprisingly it has been discovered that a coating composition comprising wax compound (W1) having a melting point below 85°C, provides a protective coating on glass containers, that is completely washed of during cleaning of glass containers.

Surprisingly it has been discovered that a coating composition comprising wax compound (W1) having a melting point below 85°C, provides a lubricating coating on glass containers and especially returnable glass containers.

Surprisingly it has been discovered that a coating composition comprising wax compound (W1) having a melting point below 85°C, provides a coating on the glass containers that is washed of completely during the washing step of the returnable containers and that resists to the treatment of the recycled containers until they leave the filling plant.

Surprisingly it has been discovered that a process for applying a coating composition in form of an aqueous dispersion on the surface of a glass container with coating composition comprising wax compound (W1) having a melting point below 85°C, provides a process for applying a coating composition that is washed of completely during the washing step of the returnable containers and that resists to the treatment of the recycled containers until they leave the filling plant.

### [Detailed description of the invention]

In a first aspect the present invention relates to a coating composition suitable for glass containers said coating composition comprises a wax compound (W1) characterized in that the wax compound (W1) has a melting point below 85°C.

In a second aspect the present invention relates to a coating composition for glass containers said coating composition comprises a wax compound (W1) characterized in that that the wax compound (W1) has a melting point below 85°C.

In a third aspect the present invention relates to a process for applying a coating composition on the surface of glass containers said coating composition comprises a wax compound (W1) characterized in that that the wax compound (W1) has a melting point below 85°C, said coating composition is applied in form of an aqueous dispersion.

In a fourth aspect the present invention relates to the use of a coating composition for lubricating the surface of glass containers said coating composition comprises a wax compound (W1) characterized in that the wax compound (W1) has a melting point below 85°C.

By saying that a range is from x to y in the present invention, it is meant that the upper and lower limit of this range are included, equivalent to at least x and up to y.

By saying that a range is between x and y in the present invention, it is meant that the upper and lower limit of this range are excluded, equivalent to more than or above x and less than or below y.

**With regard to the coating composition of** the present invention, **it comprises wax compound (W1)** that is a low melting point wax in comparison to the partly oxidized polyethylene waxes usually used. The wax compound (W1) can be pure or mixture of wax compounds, as long as the mixture is possessing the melting point as given below and preferably the melting point and saponification number as given below.

The melting point of the wax compound (W1) is expressed as drop melting point. The melting point is evaluated as drop melting point according to ISO 6244:1982. Preferably the melting point of the wax compound (W1) is below 85°C. More preferably the melting point of the wax compound (W1) is below 84°C, still more preferably below 83°C, even still more preferably below 82°C, advantageously below 81°C and more advantageously below 80°C.

More preferably the melting point of the wax compound (W1) is above 60°C. Still more preferably the melting point of the wax compound (W1) is above 61°C, even still more preferably above 62°C, even still more preferably above 63°C, advantageously above 64°C and more advantageously above 65°C.

More preferably the melting point of the wax compound (W1) is between 60°C and 85°C. Still more preferably the melting point of the wax is between 61°C and 84°C, even still more preferably between 62°C and 83°C, even still more preferably between 63°C and 82°C, advantageously between 64°C and 81°C and more advantageously between 65°C and 80°C.

The saponification number of wax compound (W1) is above 20 mg KOH/g. More preferably the saponification number of the wax compound (W1) is above 25 mg KOH/g, still more preferably above 30 mg KOH/g, even still more preferably above 33 mg KOH/g, advantageously above 35 mg KOH/g and more advantageously above 40 mg KOH/g.

The saponification number of wax compound (W1) is below 250 mg KOH/g. More preferably the saponification number of the wax compound (W1) is below 225 mg KOH/g, still more preferably below 220 mg KOH/g, even still more preferably below 210 mg KOH/g, advantageously below 200 mg KOH/g and more advantageously below 190 mg KOH/g.

More preferably the saponification number of wax compound (W1) is between 20 mg KOH/g and 250 mg KOH/g, still more preferably between 25 mg KOH/g and 225 mg KOH/g, even still more preferably between 30 mg KOH/g and 220 mg KOH/g, advantageously between 33 mg KOH/g and 210 mg KOH/g, more advantageously between 35 mg KOH/g and 200 mg KOH/g and even more advantageously between 40 mg KOH/g and 200 mg KOH/g.

The acid number of the wax compound (W1) can be above 1 mg KOH/g. More preferably the acid number of the wax compound (W1) is above 2 mg KOH/g, still more preferably above 2.5 mg KOH/g, even still more preferably above 3 mg KOH/g, advantageously above 3.5 mg KOH/g and more advantageously above 4 mg KOH/g. The acid number can be measured according to ASTM D1386 "Standard Test Method for Acid Number (Empirical) of Synthetic and Natural Waxes".

The acid number of the wax compound (W1) can be below 25 mg KOH/g. More preferably the acid number of the wax compound (W1) is below 24 mg KOH/g, still more preferably below 23 mg KOH/g, even still more preferably below 22 mg KOH/g, advantageously below 21 mg KOH/g and more advantageously below 20 mg KOH/g.

More preferably the acid number of the wax compound (W1) is between 2 mg KOH/g and 24 mg KOH/g, still more preferably between 2.5 mg KOH/g and 23 mg KOH/g, even still more preferably between 3 mg KOH/g and 22 mg KOH/g, advantageously between 3.5 mg KOH/g and 21 mg KOH/g and more advantageously between 4 mg KOH/g and 20 mg KOH/g.

The wax compound (W1) can be made of natural or synthetic waxes or a mixture of blend of both. Useful natural waxes include vegetable waxes, animal waxes and mixtures thereof, as long as they have the required melting point defined before. Preferably wax compound (W1) has the required melting point and saponification number as defined before.

The wax compound (W1) according to the invention comprises at least 50wt% of a compound comprising an ester function, preferably 51wt, more preferably 52wt%, even more preferably 53wt%, advantageously 54wt% and more advantageously 55wt%. The compound comprising an ester function or simply ester is preferably an organic ester. The organic ester is made from at least an alcohol and a fatty acid. The compound comprising the ester function can be a monoester, a diester, a triester or mixtures thereof.

The alcohol of the organic ester can have one or several hydroxyl groups. Preferably the alcohol of the organic ester is water soluble. By water soluble is meant that the alcohol is either completely miscible with water or that it has a solubility greater than 0.005 mol/100g water at 1013mbar and 25°C. Preferably the solubility greater than 0.01 mol/100g water at 1013mbar and 25°C, and more preferably the solubility greater than 0.025 mol/100g water at 1013mbar and 25°C.

Examples of alcohols in the present invention are methanol, ethanol, propanol, butanol; pentanol, hexanol; 1,2 ethandiol; 1,3 propanediol; 1,2 propanediol; 1,4 butanediol; 1,2 butanediol; 1,3 butanediol; 1,5 pentanediol; 1,2 pentanediol; 1,3 pentanediol; 1,6 hexane diol; diethylene glycol, triethylene glycol; glycerol or mixtures thereof, but not limited to this list.

The fatty acid is chosen from long and very long chain hydrocarbons fatty acids. The hydrocarbon has at least 12 carbon atoms, preferably at least 14 carbon atoms. The hydrocarbon has at most 52 carbon atoms, preferably at most 50 carbons.

The hydrocarbon chain of the fatty acid can be a linear or branched alkyls, alkenyls.

Examples of the acid are lauric acid, tridecylic acid, myristic acid, pentadecylic acid, palmitic acid, margaric acid, stearic acid, nonadecylic acid, arachidic acid, heneicosylic acid, behenic acid, tricosylic acid, lignoceric acid, pentacosylic acid, cerotic acid, heptacosylic acid, montanic acid, nonacosylic acid, melissic acid, henatriacontylic acid, lacceroic acid, psyllic acid, geddic acid, ceroplastic acid, hexatriacontylic acid, heptatriacontanoic acid, octatriacontanoic acid, myristoleic acid, palmitoleic acid, sapienic acid, oleic acid, elaidic acid, vaccenic acid, linoleic acid, linoelaidic acid, α-linolenic acid, arachidonic acid, eicosapentaenoic acid, erucic acid, docosahexaenoic acid.

The organic ester, that is made from at least an alcohol and a fatty acid, of the wax compound (W1), can also be a mixture of different alcohols and fatty acids as listed above.

In a first embodiment the wax compound (W1) is chosen from a mixture comprising at least two compounds chosen from organic ester, fatty acid and alcohol.

In one embodiment the wax compound (W1) is chosen from a mixture comprising at least two compounds chosen from, monoesters, diesters, triesters, hydroxy monoesters, hydroxypolyesters, acid esters, acid polyesters, hydrocarbons, fatty acids, fatty alcools. Preferably the ratio of free fatty acids and fatty alcohols is less than 80wt% in the wax compound (W1).

In another embodiment the wax compound (W1) is chosen from a mixture comprising at least two compounds chosen from organic esters, hydrocarbons, fatty acids. Preferably the ratio of free fatty acids is less than 80wt% in the wax compound (W1)

In still another embodiment the wax compound (W1) is chosen from a mixture comprising aliphatic esters, ω-hydroxycarboxylic acids and fatty alcohols. Preferably the ratio of free fatty alcohols is less than 80wt% in the wax compound (W1)

In still another embodiment the wax compound (W1) is chosen from a mixture comprising an ester from a diol and fatty acids. Preferably the diol has less than 6 carbons.

All the above mentioned embodiments for the wax compound (W1) comprise at least 50wt% of a compound comprising an ester function as defined before.

For all the above mentioned embodiments for the wax compound (W1) it has to have a melting point below 90°C and preferably below 85°C.

As the wax compound (W1) having a melting point below 85°C can be a mixture, the melting point is not a single peak, but could also be a range. However the melting range is below the indicated temperature.

More preferably all the above mentioned embodiments for the wax compound (W1) have a saponification number of wax compound (W1) that is above 20 mg KOH/g.

Optionally the wax compound (W1) used in the present invention, has a low needle penetration. By low is meant that the needle penetration is less than 6*10⁻¹ mm, advantageously less than 5*10⁻¹ mm. The needle penetration can be estimated according to ASTM D1321.

**With regard to the process of applying the coating composition comprising the wax compound (W1) according to the present invention,** it is made by contact between coating composition and the container with a coating application method. The method can be spraying or dipping or a coating applicator.

The process comprises the steps of:
i) applying the coating composition on the surface of a glass container.

The coating composition that is applied comprises the wax compound (W1) as defined before.

The means for applying the coating by spraying comprise spraying means.

The means for applying the coating by dipping comprise a recipient containing the coating composition in which the containers are dipped.

The coating applicator can be a brush, capillary, sponge, fibre or the like. The coating material is applied on the surface of the container via the contact area between the coating applicator and container surface.

Preferably coating composition is applied by spraying.

The coating composition comprising the wax compound (W1) is preferably applied as an aqueous dispersion. The aqueous dispersion comprises surfactant or surfactants and the wax compound (W1).

A dispersion according to the invention is a colloidal system at ambient temperature with a continuous liquid phase and a discontinuous solid phase that is distributed throughout the continuous phase. By ambient temperature is meant the interval between 20°C and 25°C. After the application of the coating material the continuous liquid phase evaporates and the discontinuous solid phase forms the coating.

The surfactant can be can be non-ionic, anionic, cationic or zwitterionic. Preferably, the surfactant(s) is cationic.

Preferably the coating composition applied on the surface of the glass containers comprises surfactant or surfactants and the wax compound (W1).

The quantity of the surfactant or surfactants in the coating composition is comprised between 0.5wt% and 50wt% relative to the coating composition applied comprising surfactant or surfactants and the wax compound (W1). In this calculation only the solids coating composition are considered namely the surfactant or surfactants and the wax compound (W1).

Preferably the quantity of the surfactant or surfactants in the coating composition is comprised between 5wt% and 50wt%, more preferably between 10wt% and 45wt%, still more preferably between 10wt% and 40wt%, even more preferably between 15wt% and 40wt%, advantageously between 20wt% and 40wt% and more advantageously between 20wt% and 40wt%.

The quantity of the wax compound (W1) in the aqueous dispersion that is applied on the glass container may be expressed as ratio of wax compound (W1) to water of from 1:5 to 1:2000, preferably from 1:10 to 1:1000.

Preferably the aqueous dispersion that is applied on the surface of a glass container comprises between 0.05wt% and 5wt% of coating composition comprising the wax compound (W1) according to the invention.

Preferably the aqueous dispersion that is applied on the surface of a glass container comprises between 0.1 and 4wt% of coating composition comprising the wax compound (W1) according to the invention, more preferably between 0.2 and 4wt%, still more preferably between 0.5wt% and 4wt% and even more preferably between 0.5wt% and 3.5wt%.

The coating composition comprising the wax compound (W1) that is applied on the surface of a glass container as an aqueous dispersion can be obtained by dilution of a more concentrated dispersion.

The more concentrated aqueous dispersion comprising the wax compound (W1) has a solid content between 5wt% and 50wt%, based on wax compound (W1) and surfactant or surfactants.

Preferably the more concentrated aqueous dispersion comprising the wax compound (W1) has a solid content between 5wt% and 60wt%, based on wax compound (W1) and surfactant or surfactants, more preferably between 10wt% and 55wt%, still more preferably between 10wt% and 50wt% and even more preferably between 15wt% and 45wt%.

The process of applying the coating composition comprising the wax compound (W1) according to the present invention, that it is made by contact between coating composition and the container with a coating application method as outlined before, can optionally comprise the additional step of diluting a more concentrated aqueous dispersion comprising the wax compound (W1), before the step of applying the coating composition on the surface of a glass container.

The process of applying the coating composition comprising the wax compound (W1) according to the present invention, that it is made by contact between coating composition and the container with a coating application method as outlined before, can optionally comprise the additional step of preparing a more concentrated aqueous dispersion comprising the wax compound (W1), before the steps of diluting a more concentrated aqueous dispersion comprising the wax compound (W1)and of applying the coating composition on the surface of a glass container.

**With regard to the glass container of** the present invention, it is a bottle or a jar. The bottle can be a beer, a milk or a soft drink bottle, wine bottles.

Preferable the glass container is a returnable glass container.

### [Methods of evaluation]

The thickness of the hot end coating (HEC) is measured by method of estimation the amount of light reflection from a coated glass surface in comparison to a measurement taken from a known calibrated thickness standard with a Hot End Coating Measuring System from AGR International Inc.. The thickness is expressed in CTU (coating thickness unit; 1 CTU=0.25nm in the case of SnO₂).

As a washing machine a Miele disinfector type G7835 CD was used. The effective washing time is 13.5 minutes and the total cycle time is 65 minutes. The wash temperature was between 60°-80°C.

The line simulator used was an equipment from AGR International Inc. .Line simulation was done under wet conditions at a speed of 30rpm.

The pasteurization was made with a Miele disinfector type G7835, with program 3-pasteur at a water temperature of 65°C and a total cycle time of 40 minutes.

One cycle consists of washing (caustic washing), coating application, line simulation for 1 minute, pasteurization, line simulation of 1 minute, samples are evaluated concerning the visual surface appearance of containers.

### [Examples]

50cl green glass or flint glass water bottles were used. The bottles had a tin oxide hot end coating of between 40 and 55 CTU.

Candelilla Wax is used, having a melting point (range) from 68.5°C to 72.5°C and a saponification value between 43 and 65 mg KOH/g was used as wax compound (W1) here called (W1a).

A wax compound comprising essentially C18-C36 acid glycol ester melting point of 72.6°C and a saponification value 169 mg KOH/g was used as wax compound (W1) here called (W1b).

As first comparative examples an oxidized polyethylene wax having a melting point (range) from 105°C to 111°C and a saponification value of less than 30 mg KOH/g was used as comparative here called (C1).

Aqueous dispersions of each wax compound were prepared at a solid content of 28wt% based on respective wax compound and surfactant. A cationic surfactant is used.

The aqueous dispersions were diluted with additional water for obtaining a dispersion with 1wt% solid content based on respective wax compound and surfactant. This diluted aqueous dispersion is applied on the container surface.

The coating was applied with a spray gun Walter Pilot WA XV from Walther Spritz- und Lackiersysteme GmbH.

The containers are passed through the cycle and each wax compound (W1a), (W1b) and (C1) is tested.

With wax compound (C1) after several cycles the surface aspect of the bottles is not that nice and shiny anymore, also spots become visible. Apparently the coating composition comprising this wax compound seems not completely to be removed and a built up or zones with too important coating thickness are observed.

The returnable containers tested with wax compounds (W1a) and (W1b) maintain their nice surface aspect. The coating is removed completely during washing and not built up is detected.

## Claims

1. A coating composition suitable for glass containers said coating composition comprises a wax compound (W1) **characterized in that** the wax compound (W1) has a melting point below 85°C.

2. The coating composition according to claim 1 **characterized in that** the wax compound (W1) has a melting point between 60°C and 85°C and preferably between 65°C and 80°C.

3. The coating composition according to any of claims 1 to 2, **characterized in that** the saponification number of wax compound (W1) is above 20 mg KOH/g.

4. The coating composition according to any of claims 1 to 3, **characterized in that** the saponification number of wax compound (W1) is between 20 mg KOH/g and 250 mg KOH/g, still more preferably between 25 mg KOH/g and 225 mg KOH/g, even still more preferably between 30 mg KOH/g and 220 mg KOH/g, advantageously between 33 mg KOH/g and 210 mg KOH/g, more advantageously between 35 mg KOH/g and 200 mg KOH/g and even more advantageously between 40 mg KOH/g and 200 mg KOH/g.

5. The coating composition according to any of claims 1 to 4, **characterized in that** the acid number of the wax compound (W1) is above 1 mg KOH/g.

6. The coating composition according to any of claims 1 to 5, **characterized in that** the acid number of the wax compound (W1) is below 24 mg KOH/g.

7. The coating composition according to any of claims 1 to 5 **characterized in that** the acid number of the wax compound (W1) is between 2 mg KOH/g and 24 mg KOH/g, still more preferably between 2.5 mg KOH/g and 23 mg KOH/g, even still more preferably between 3 mg KOH/g and 22 mg KOH/g, advantageously between 3.5 mg KOH/g and 21 mg KOH/g and more advantageously between 4 mg KOH/g and 20 mg KOH/g.

8. The coating composition according to any of claims 1 to 7 **characterized in that** the wax compound (W1) comprises at least 50wt% of a compound comprising an ester function.

9. The coating composition according to 8, **characterized in that** compound comprising an ester function is made from at least an alcohol and a fatty acid and the alcohol of the organic ester is water soluble.

10. The coating composition according to any of claims 1 to 9, **characterized in that** the coating composition comprises a surfactant.

11. The coating composition according to 10, **characterized in that** the surfactant is comprised between 0.5wt% and 50wt%.

12. The coating composition according to any of claims 10 to 11 **characterized in that** the surfactant comprises a cationic surfactant.

13. A process for coating glass containers, said process comprises the steps of:
j) applying the coating composition according to any of claims 1 to 12 on the surface of a glass container,
**characterized in that** the coating composition is applied in form of an aqueous dispersion.

14. The process according to claim 13, **characterized in that** the aqueous dispersion comprises between 0.05wt and 5wt% of coating composition.

15. The process according to claim 13 or 14, **characterized in that** the coating composition in form of an aqueous dispersion is diluted before the application step.

16. Use of the coating composition according to any of claims 1 to 12 for returnable glass containers.
